# DEMANDE DE BREVET EUROPEEN

(11) **EP 0 923 140 A1**
(43) Date de publication de la demande: **16.06.1999**
(21) Numéro de dépôt: 98403067.6
(22) Date de dépôt: 03.12.1998
(51) Int. Cl.: H01L 31/02, G01V 8/12, G01D 5/00

(54) **Cellule photoélectrique configurable**

(30) Priorité: 05.12.1997 FR 9715518
(71) Demandeur: SCHNEIDER ELECTRIC SA, 92100 Boulogne Billancourt (FR)
(72) Inventeur: Even, Stéphane, 16000 Angoulème (FR); Guillot, Alain, 16730 Fleac (FR)

(57) **Abrégé**

Cellule photoélectrique présentant des moyens de configuration de mode de fonctionnement. La cellule a plusieurs zones optosensibles 11,12,D susceptibles de délivrer des grandeurs qui sont activées ou traitées de différentes manières, à l'aide de moyens de configuration et/ou de traitement 7,19. La cellule peut ainsi être utilisée en mode reflex, proximité ou proximité avec effacement d'arrière-plan. Des parties amplificatrices 16a,16b sont prévues latéralement aux zones optosensibles pour amplifier les grandeurs électriques avant de les acheminer au microcontrôleur 19 du circuit de traitement 6.

## Description

La présente invention concerne une cellule photoélectrique destinée à la détection d'un objet, comprenant un composant optique doté d'une aire photosensible qui engendre sur un conducteur un signal électrique de réception en fonction de l'incidence d'un faisceau optique, ainsi qu'un circuit d'amplification et de traitement engendrant un signal de sortie fonction du signal électrique.

De telles cellules photoélectriques sont bien connues. Quand elles fonctionnent par détection d'un flux lumineux provenant de l'infini, sans effet de proximité, elles font partie d'une première famille de cellules : reflex, reflex polarisé ou barrage,. Quand elles fonctionnent par détection de rayons lumineux à forte incidence, elles font partie d'une deuxième famille de cellules fonctionnant soit par mesure d'énergie dans une sous-famille dite de "proximité", soit par triangulation avec comparaison des deux voies d'un composant du type PSD dans une sous-famille dite de "proximité avec effacement d'arrière-plan". Les modes de détection de ces deux familles seront par la suite désignés pour simplifier de "mode reflex" et de "mode proximité". Les cellules de la première famille servent notamment à détecter la présence d'un objet, tandis que les cellules de la deuxième famille servent notamment à détecter la distance ou la brillance d'un objet.

Les composants optiques nécessaires pour fabriquer ces deux familles sont différents. Ils sont de petite surface, typiquement de dimensions 0,6x0,6mm, pour des cellules reflex et de plus grande surface, typiquement de dimensions apparentes 1,6x1,6mm, pour des cellules de proximité, ou de 1x2mm pour des cellules de proximité à effacement d'arrière-plan. Il en résulte que pour gérer les deux familles de produits il faut assurer l'approvisionnement et le stockage de plusieurs types de composants, typiquement d'au moins trois composants différents.

De plus, les contraintes de compatibilité magnétique pesant sur les cellules photoélectriques vont croissant alors que les composants optiques qu'elles utilisent actuellement ont l'inconvénient d'offrir une amplification intrinsèque faible dans le cas des phototransistors, voire nulle dans le cas des photodiodes.

L'invention a pour but de remédier à ces inconvénients en rendant, par des dispositions simples, susceptibles d'être prises particulièrement au niveau du composant optosensible ou du circuit de traitement, une cellule photoélectrique plus facile à insensibiliser aux parasites et apte à fonctionner selon divers modes opératoires pour offrir différentes possibilités de détection.

Selon un premier aspect de l'invention, l'aire photosensible est partagée par une séparation en au moins deux aires partielles, adjacentes et isolées l'une de l'autre, ces aires partielles étant aptes à fournir des grandeurs électriques respectives sur deux voies reliées au circuit d'amplification et de traitement, et des moyens de configuration sont prévus pour sélectionner le mode de fonctionnement prescrit pour la cellule ; ces moyens de configuration sont de préférence aptes à activer et/ou traiter, en réponse à des moyens de sélection qui peuvent être des interrupteurs et/ou un microcontrôleur, les grandeurs électriques fournies par les aires partielles en fonction du mode de fonctionnement sélectionné.

De préférence et lorsqu'on souhaite configurer la cellule en mode reflex et en mode proximité, les aires partielles adjacentes sont aptes à délivrer des grandeurs électriques respectives à un premier conducteur et un deuxième conducteur reliés à la voie et les moyens de configuration sont agencés pour activer le premier conducteur en mode reflex et le deuxième conducteur en mode proximité ; l'aire photosensible mise en oeuvre en mode proximité peut elle-même être partagée, par une démarcation transversale à la séparation, en zones adjacentes isolées qui sont reliées aux voies respectives et dont la surface varie de façon continue dans la direction principale du composant, cette direction étant celle de déplacement de la tâche optique du faisceau incident sur l'aire photoréceptrice en mode proximité.

De préférence et lorsqu'on souhaite configurer la cellule en mode proximité ou en mode proximité avec effacement d'arrière-plan, l'aire photosensible mise en oeuvre peut être partagée, par une démarcation transversale à la direction principale, en zones adjacentes isolées dont la surface varie de façon continue dans la direction principale du composant, celui-ci étant un composant intégré comportant de préférence, latéralement à l'aire photosensible, deux parties amplificatrices du circuit d'amplification et de traitement qui réalisent une amplification du signal provenant des aires partielles ou des zones photosensibles et qui sont reliées par les voies respectives à une partie restante du circuit d'amplification et de traitement qui effectue la configuration précitée.

Selon un deuxième aspect de l'invention, la cellule photoélectrique comprend des moyens de configuration aptes à agir sur l'aire photosensible ou sur le circuit de traitement en réponse à un moyen de sélection d'un mode de fonctionnement reflex ou d'un mode de fonctionnement proximité pour la cellule.

Une description plus détaillée va être faite ci-après d'un mode de réalisation non limitatif de l'invention, en regard des dessins annexés.

La figure 1 représente schématiquement une cellule photoélectrique.

La figure 2 montre la constitution d'un composant optorécepteur d'une cellule photoélectrique conforme à l'invention.

Les figures 3 et 4 montrent le composant optorécepteur configuré respectivement en mode reflex et en mode proximité.

La figure 5 représente une variante du composant selon l'invention.

La figure 6 représente une autre variante.

La figure 7 illustre une forme d'exécution des moyens de configuration;

La figure 8 montre un exemple de traitement des signaux de tension délivrés par le composant.

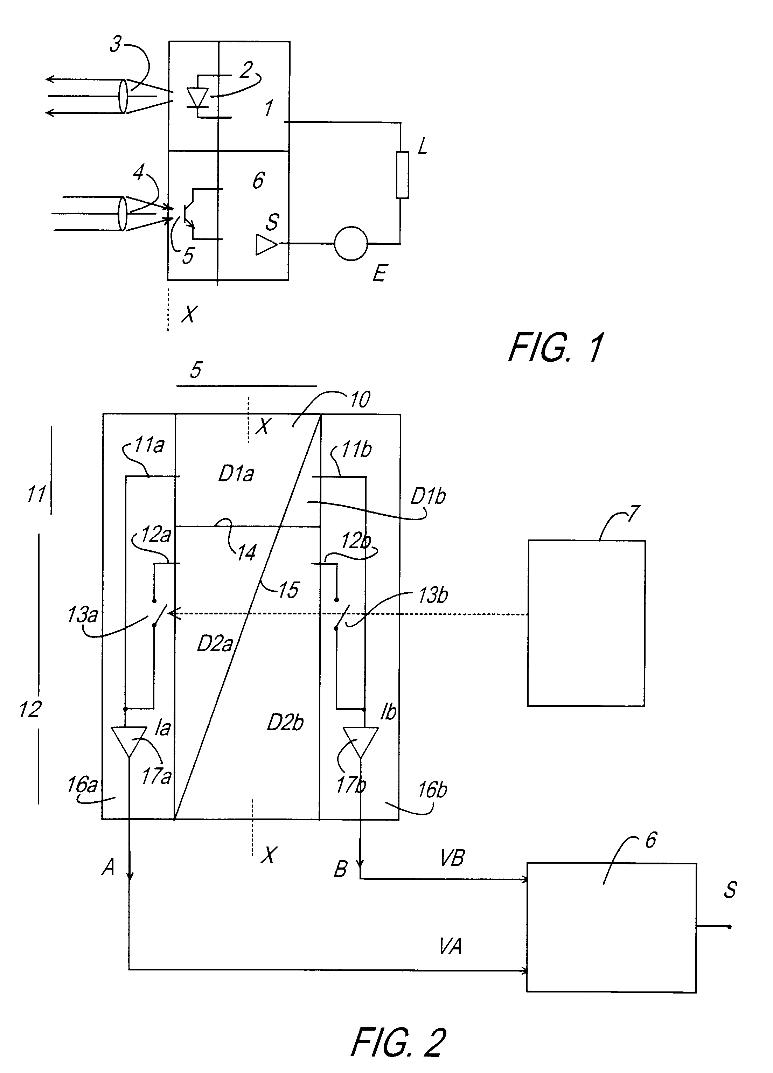

La cellule photoélectrique illustrée sur la figure 1 comprend un circuit électronique 1 qui engendre des impulsions électriques d'émission et une diode d'émission 2 qui émet un faisceau lumineux collimaté par une lentille 3. L'ensemble d'émission de la cellule n'est pas l'objet de l'invention et ne sera pas davantage décrit. La cellule comprend d'autre part un ensemble de réception, muni d'une lentille 4 qui focalise le faisceau lumineux reçu en fonction de la présence d'un objet, d'un organe optosensible 5 qui transforme le flux lumineux reçu en une grandeur électrique et d'un circuit électronique de réception 6 qui amplifie et traite cette grandeur pour engendrer un signal de sortie S fonction de la présence de l'objet. La cellule est reliée par une liaison à deux ou trois fils à une source d'énergie E et à une charge L.

La cellule est comme on va le voir en mesure de fonctionner soit en mode reflex, soit en mode proximité, au sens défini précédemment, et ce à l'aide de moyens de configuration 7.

Dans la cellule photoélectrique représentée (voir figure 2), l'organe optosensible 5 fait partie d'un composant unitaire de type intégré C qui comporte par ailleurs une partie amplificatrice du circuit électronique de réception. Le composant intégré C est doté d'une aire photoréceptrice 10 qui s'étend le long d'une direction X correspondant à la direction de déplacement de la tâche optique lors d'un mouvement d'un objet à détecter en mode proximité. L'aire photoréceptrice 10 est formée sur la surface d'un matériau optosensible approprié ; elle fonctionne présentement en photodiode, mais pourrait aussi fonctionner différemment, et elle est partagée en deux aires 11,12 isolées l'une de l'autre et adjacentes dans la direction X. Les aires 11,12 sont isolées le long d'une ligne de séparation 14 perpendiculaire à la direction X.

Les aires partielles 11,12 sont partagées, par une démarcation 15 disposée en biais, par exemple en diagonale, en zones de photodiodes adjacentes isolées trapézoïdales ou triangulaires D1a,D1b et respectivement D2a,D2b dont la surface varie de façon sensiblement continue dans la direction X. Cette variation peut être linéaire ou non linéaire. Le composant intégré C comprend en adjacence à l'aire photosensible 10 des zones latérales amplificatrices respectives 16a,16b qui sont situées des deux côtés opposés du composant et qui assurent au moins en partie et comme on le verra plus loin la fonction d'amplification du circuit 6. Deux voies de liaison A,B relient les zones 16a,16b au reste du circuit 6. Les zones de photodiodes D1a,D2a des aires 11,12 sont connectées en parallèle à la voie A par des conducteurs 11a,12a, tandis que les zones de photodiodes D1b,D2b des aires 11,12 sont connectées en parallèle à la voie B par des conducteurs 11b,12b ; les conducteurs 12a,12b sont dotés d'interrupteurs électroniques respectifs 13a,13b sollicités par les moyens de configuration 7 pour activer ou non ces zones.

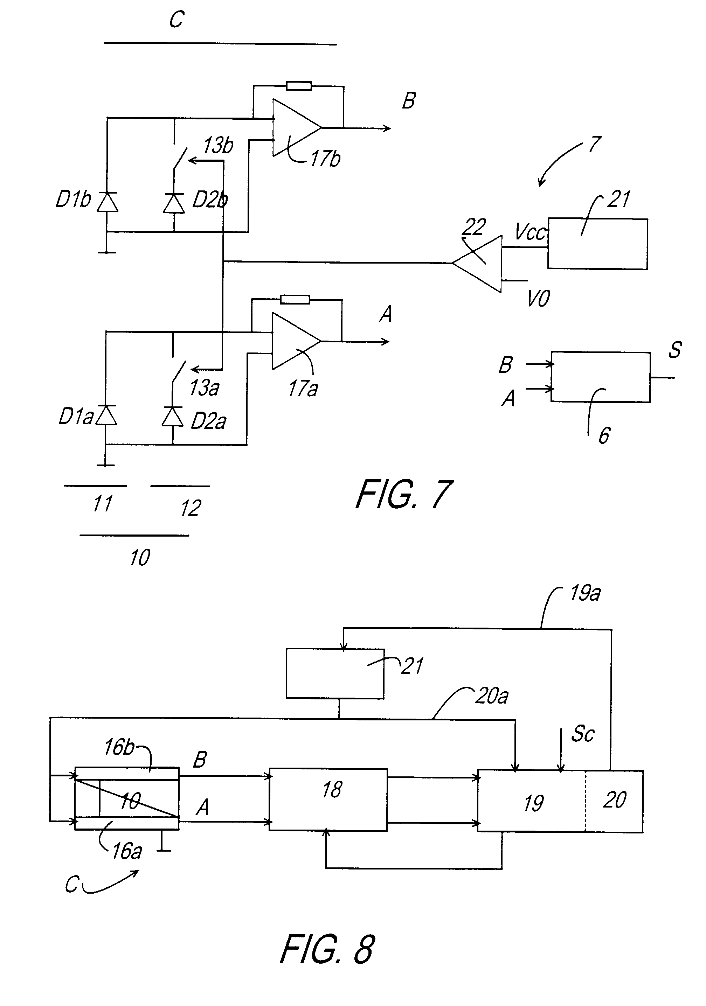

Les courants Ia,Ib acheminés par les conducteurs 11a,12a et 11b,12b sont conduits à des circuits amplificateurs et suppresseurs de lumière ambiante appropriés 17a,17b situés dans les zones 16a,16b et il en résulte sur les voies A,B des tensions Va,Vb qui sont analysées dans une partie convenable du circuit électronique de réception 6. A cet effet (voir figure 8), le circuit 6 comprend par exemple un échantillonneur-bloqueur 18 et un microcontrôleur 19 à convertisseur numérique-analogique intégré 20, l'entrée de référence 20a de ce convertisseur étant reliée à un régulateur de tension programmable 21 qui fait partie des moyens de configuration 7. Le régulateur de tension 21, en réponse à un signal de fonctionnement reflex/proximité transmis par le microcontrôleur via une ligne 19a suite à un ordre de sélection Sc fourni par un moyen de sélection tel qu'un interrupteur ou un fil de connexion, délivre des niveaux de tension différents en mode reflex et proximité.

Les moyens de configuration 7 peuvent comprendre (voir figure 7), outre le régulateur de tension programmable 21, un comparateur 22 sollicité sur une entrée par une tension fixe V0 et sur une autre entrée par une tension Vcc fournie par le régulateur de tension programmable 21. La commutation de configuration peut bien entendu s'effectuer par tous moyens usuels électroniques ou mécaniques.

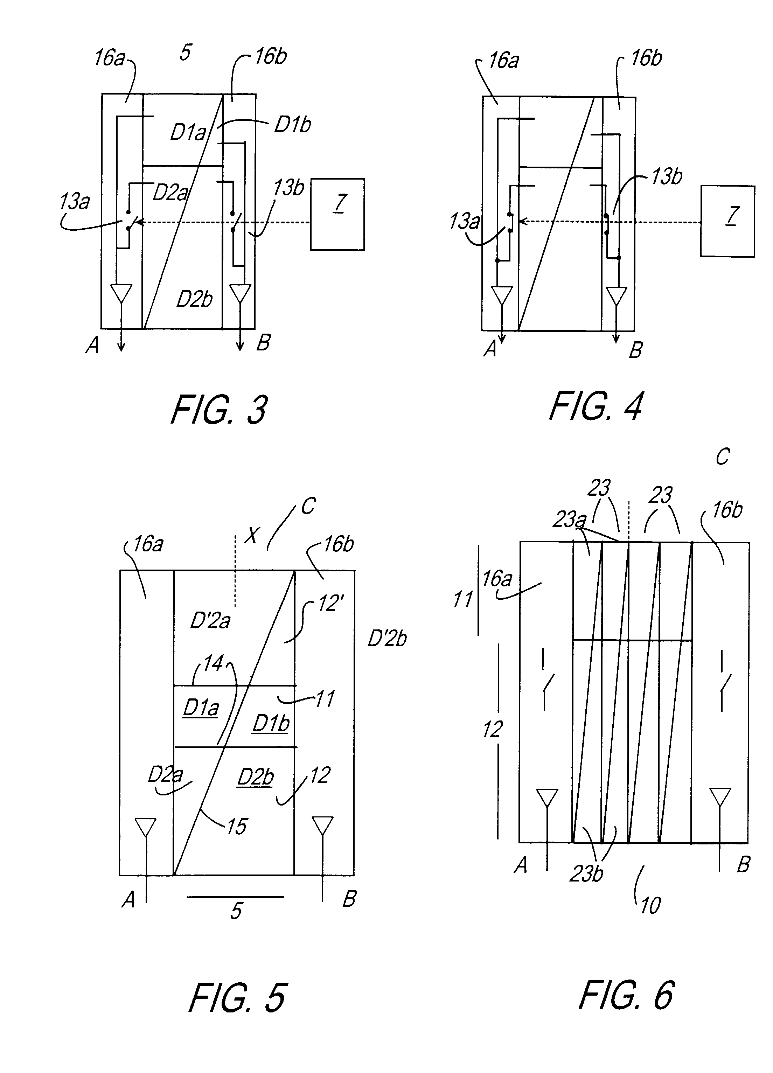

Comme indiqué sur la figure 5, les aires photosensibles 11,12 peuvent être partagées chacune en plus de deux zones par plusieurs séparations 15. L'aire 11 (zones D1a,D1b) peut être située comme indiqué au centre du composant dans la direction X, tandis que l'aire 12 (zones D2a,D2b) et une autre zone 12' (zones D'2a,D'2b) sont situées de part et d'autre de la zone 11 dans la direction X.

Les zones photosensibles D peuvent être interdigitées comme indiqué figure 6 pour adapter la cellule à une taille de tâche lumineuse plus faible que la largeur de l'aire photosensible 10. Dans ce cas, l'aire 10 est partagée en plusieurs rectangles 23 composés chacun de deux triangles 23a,23b ou autres zones de surface progressivement croissante ou décroissante selon la direction X et de géométrie appropriée; les triangles 23a étant reliés à la voie A et les triangles 23b étant reliés à la voie B.

Selon les cas, la cellule photoélectrique décrite peut fonctionner en mode reflex et en mode proximité avec la même lentille réceptrice 4 ou avec des lentilles différentes.

La cellule photoélectrique décrite fonctionne de la manière suivante.

Pour opérer en mode reflex, le signal Sc ayant un certain niveau logique est transmis au microcontrôleur 19 et celui-ci commute via la ligne 19a le régulateur de tension programmable 21 ; le régulateur 21 fournit son premier niveau de tension et les interrupteurs 13a,13b sont ouverts (figure 3). Seules les photodiodes D1a,D1b débitent un courant quand la surface photosensible 10 reçoit le flux lumineux. Les tensions Va,Vb résultant de l'amplification dans les amplificateurs 17a,17b sont sommées par le circuit de traitement 6 et le signal de sortie commute en fonction de la valeur de cette somme.

Pour opérer en mode proximité, le signal Sc ayant le niveau logique inverse est transmis au microcontrôleur 19 et celui-ci commute via la ligne 19a le régulateur de tension programmable ; le régulateur 21 fournit son deuxième niveau de tension et les interrupteurs 13a,13b sont fermés (figure 4). L'ensemble des photodiodes D1a,D1b et D2a,D2b débite du courant et les tensions Va,Vb sont soit sommées par le microcontrôleur 19 du circuit de traitement 6 (fonctionnement en proximité), soit comparées entre elles par le microcontrôleur 19 (fonctionnement en proximité avec effacement d'arrière-plan) et le signal de sortie commute en fonction de la valeur de cette somme ou du résultat de comparaison.

Quand on souhaite faire fonctionner la cellule dans les seuls modes proximité et proximité avec effacement d'arrière-plan, la ligne 19a peut être omise et la configuration est effectuée à partir du signal Sc par le microcontrôleur 19 qui décide, selon le mode souhaité et en réponse aux moyens de sélection, de sommer les signaux de tension provenant des diverses zones photosensibles ou de comparer les signaux des voies A et B.

## Revendications

1. Cellule photoélectrique destinée à la détection d'un objet, comprenant un composant optique doté d'une aire photoréceptrice (10) qui engendre sur un conducteur un signal électrique de réception en fonction de l'incidence d'un faisceau optique, et comprenant un circuit d'amplification et de traitement (6) qui engendre un signal de sortie (S) fonction du signal électrique de réception,
*caractérisée par le fait que* l'aire photosensible (10) est partagée par une séparation (14) en au moins deux aires partielles (11,12 ; Da,Db), adjacentes et isolées l'une de l'autre et aptes à fournir des grandeurs électriques respectives sur deux voies (A,B) reliées au circuit d'amplification et/ou de traitement (6), et que des moyens de configuration (7,19) sont prévus pour activer et/ou traiter les grandeurs fournies par les aires partielles en fonction d'un mode de fonctionnement proximité ou d'un autre mode de fonctionnement sélectionné pour la cellule .

2. Cellule selon la revendication 1, *caractérisée par le fait que* les aires partielles adjacentes (11,12) sont aptes à fournir des grandeurs électriques respectives sur un premier conducteur (11a,11b) et un deuxième conducteur (12a,12b) reliés à la voie (A,B) et les moyens de configuration (7) sont agencés pour activer le premier conducteur en mode reflex et le deuxième conducteur en mode proximité.

3. Cellule selon la revendication 2, *caractérisée par le fait que* le composant (C) présente une direction principale (X) qui est la direction de déplacement de la tâche optique du faisceau incident sur l'aire photoréceptrice (10) en mode proximité, l'aire photosensible (11,12) mise en oeuvre en mode proximité étant elle-même partagée, par une démarcation (15) transversale à la séparation (14), en zones adjacentes isolées (Da,Db) qui sont reliées aux voies respectives (A,B) et dont la surface varie de façon continue dans la direction principale (X).

4. Cellule selon la revendication 2, *caractérisée par le fait que* les moyens de configuration (7) comprennent un comparateur (22) à une entrée duquel est applicable une tension (Vcc) différente en mode reflex et en mode proximité et dont la sortie est reliée à l'interrupteur électronique (13a,13b).

5. Cellule selon la revendication 1, *caractérisée par le fait que* le composant (C) est un composant intégré comportant, latéralement à l'aire photosensible (10), deux parties amplificatrices (16a,16b) du circuit d'amplification et de traitement (6) qui réalisent une amplification du signal provenant des zones photosensibles et qui sont reliées par les voies respectives (A,B) à une partie restante (19) du circuit d'amplification et de traitement (6).

6. Cellule selon la revendication 1, *caractérisée par le fait que* le circuit d'amplification et de traitement (6) comprend un échantillonneur-bloqueur (18) relié en entrée aux voies (A,B) de sortie du composant (C) et relié en sortie à un microcontrôleur (19) auquel est associé un convertisseur numérique-analogique (20), les moyens de configuration comprenant un organe programmable (21) relié au microcontrôleur et audit convertisseur.

7. Cellule selon la revendication 3, *caractérisée par le fait que* les zones photosensibles (D) sont interdigitées en zones (23a,23b) reliées respectivement aux voies (A,B).

8. Cellule photoélectrique destinée à la détection d'un objet, comprenant un composant doté d'une aire photosensible (10) qui engendre sur un conducteur un signal électrique de réception en fonction de l'incidence d'un faisceau optique, et comprenant d'un circuit d'amplification et/ou de traitement (6) qui engendre un signal de sortie (S) fonction du signal électrique de réception,
- le composant (C) présentant une direction principale (X) qui est la direction de déplacement de la tâche optique du faisceau incident sur l'aire photosensible (10) en mode proximité,
*caractérisée par le fait que :*
- l'aire photosensible (10) mise en oeuvre en mode proximité est partagée, par une démarcation (15) transversale à la direction principale (X), en zones adjacentes isolées (Da,Db) dont la surface varie de façon continue dans la direction principale (X),
- le composant (C) est un composant intégré comportant, latéralement à l'aire photosensible (10), deux parties (16a,16b) du circuit d'amplification et/ou de traitement (6) qui réalisent une amplification du signal acheminé à partir des zones adjacentes respectives (Da,Db) qui sont reliées par des voies respectives (A,B) à une partie restante (19) du circuit d'amplification et de traitement (6).

9. Cellule photoélectrique destinée à la détection d'un objet, comprenant un composant optique doté dune aire photoréceptrice (10) qui engendre sur un conducteur un signal électrique de réception en fonction de l'incidence d'un faisceau optique, et comprenant un circuit d'amplification et de traitement (6) qui engendre un signal de sortie (S) fonction du signal électrique de réception, *caractérisée par* des moyens de configuration aptes à agir sur l'aire photoréceptrice (10) ou sur le circuit de traitement (6) en réponse à un moyen de sélection d'un mode de fonctionnement reflex ou d'un mode de fonctionnement proximité pour la cellule.
